# EUROPEAN PATENT SPECIFICATION

(11) **EP 2 944 986 B1**
(45) Date of publication and mention of the grant of the patent: **09.09.2020**
(21) Application number: 15166617.9
(22) Date of filing: 06.05.2015
(51) Int. Cl.: G02B 5/02, G02B 26/10, G02B 27/01

(54) **IMAGE DISPLAY APPARATUS AND IMAGE DISPLAY SYSTEM**
BILDANZEIGEVORRICHTUNG UND BILDANZEIGESYSTEM
APPAREIL ET SYSTÈME D'AFFICHAGE D'IMAGES

(30) Priority: 15.05.2014 JP 2014101756; 23.03.2015 JP 2015058950
(43) Date of publication of application: 18.11.2015
(73) Proprietor: Ricoh Company, Ltd., Tokyo 143-8555 (JP)
(72) Inventor: Ichii, Daisuke, Tokyo, 143-8555 (JP); Saisho, Kenichiroh, Tokyo, 143-8555 (JP); Inamoto, Makoto, Tokyo, 143-8555 (JP)
(74) Representative: J A Kemp LLP

(56) References cited:
- WO-A1-87/06017
- JP-A- 2012 208 440
- US-A1- 2013 021 224
- US-A1- 2013 050 655

## Description

Example embodiments generally relate to an image display apparatus and an image display system.

Conventionally, image display apparatuses such as heads-up displays (HUDs) are known in the art. The HUD two-dimensionally uses an optical scanner to scan the image light emitted from a light source based on image data, in the main-scanning direction and the sub-scanning direction, and forms an intermediate image on a light dispersing member. Then, the HUD projects the magnified intermediate image to a to-be-projected member such as the front windshield of a vehicle, such that an image (virtual image) is displayed in the viewing field of a user.

US 2013/0050655 A1 and US 2013/0021224 A1 discloses a head-up display apparatus, a screen member and an image projecting method.

JP-2013-061554-A discloses an image display apparatus that uses a projection optical system provided with a concave mirror and a convex mirror. Such a projection optical system is used in JP-2013-061554-A in order to achieve downsizing of the image display apparatus without sacrificing high brightness and large screen. Moreover, JP-2013-061554-A discloses that it becomes easier to control the divergence angle of an intermediate image due to the use of the image display apparatus, and an efficient projection optical system with small loss in light quantity is achieved. Further, as an efficient optical system is achieved according to the disclosure of JP-2013-061554-A, a high-brightness image is obtained without the provision of a large light source. Accordingly, downsizing of the image display apparatus is achieved.

However, in the image display apparatus disclosed in JP-2013-061554-A, a plurality of light reflecting members including a concave mirror and a convex mirror are provided for the projection optical system. For this reason, upsizing of the projection optical system is unavoidable, and downsizing of the image display apparatus as a whole is insufficient.

In order to downsize the image display apparatus, it is effective to decrease the light reflecting member of the projection optical system to only one, and shorten the optical path length between the light dispersing member and the light reflecting member. However, when the optical path length between the light dispersing member and the light reflecting member is shortened, the incidence angles of the laser-beam bundles that exit from the light dispersing member become wide on the light reflecting member. As the incidence angles of laser-beam bundles near the edges in the main-scanning direction become wider, the incidence angles of the laser-beam bundles from portions of an image near the edges in the main-scanning direction become particularly wide. For this reason, as will be described later, the brightness of portions of an image near the edges in the main-scanning direction is reduced, and the portions of an image near the edges in the main-scanning direction become relatively dark. This leads to degradation in image quality.

If the laser-beam bundles of pixels that are dispersed from a light dispersing member are reflected at the reflection plane of a light reflecting member and then are guided to within a prescribed viewpoint range, the pixels become visually recognizable by the laser-beam bundles in the viewpoint range. Accordingly, an image is visually recognized as a whole. On the other hand, the laser-beam bundles that are not guided to within the viewpoint range are not visually recognizable in the viewpoint range. Such laser-beam bundles do not contribute to image display and thus are wasteful. For this reason, when the ratio of the laser-beam bundles that are not guided to within the viewpoint range is high, the brightness of the pixels becomes relatively low.

The ratio of the laser-beam bundles that are not guided to within the viewpoint range becomes higher for a laser-beam bundle whose diameter corresponding to a point (or a pixel) of the intermediate image is large on the reflection plane of the light reflecting member, and the diameter of laser-beam bundle is larger for a laser-beam bundle whose incidence angle on the light reflecting member is wide. For this reason, the laser-beam bundles from pixels near the edges in the main-scanning direction, where the incidence angle becomes wide as the optical path length between the light dispersing member and the light reflecting member is shortened, tend to have a high ratio of not being guided to within the viewpoint rage, and the brightness of these pixels becomes relatively low. As a result, portions of an image near the edges in the main-scanning direction become relatively dark.

As a method of preventing portions of an image near the edges in the main-scanning direction from becoming relatively dark, a method may be adopted in which the intermediate image formed on a light dispersing member is enlarged (the magnifying power of the projection optical system is decreased). However, such a method leads to an increase in the optical path length between the light dispersing member and the light reflecting member, and the size of the light dispersing member increases. Accordingly, upsizing of the image display apparatus is unavoidable

The problems mentioned above are applicable not only to cases in which the light reflecting member of the projection optical system is only one, but also to cases in which the optical path length between the light dispersing member and the light reflecting member is shortened to downsize the projection optical system, in a similar manner.

According to the present invention there is provided an image display apparatus that enables an observer to visually recognize an image within a specified viewpoint range, as defined in the independent claim.

Embodiments of the present invention provide an image display system including the image display apparatus.

According to the present invention, large-size image and downsizing of the image display apparatus are both achieved while suppressing loss in brightness near the edges of an image.

A more complete appreciation of exemplary embodiments and the many attendant advantages thereof will be readily obtained as the same becomes better understood by reference to the following detailed description when considered in connection with the accompanying drawings.
FIG. 1 is a schematic diagram of the optical path of the light that is scanned by an optical scanner, and then is dispersed by a microlens array so as to enter a projector mirror, which is viewed from the sub-scanning direction, in an on-vehicle HUD according to an example embodiment of the present invention.
FIG. 2 is a schematic diagram of a car for which an on-vehicle HUD according to an example embodiment of the present invention is provided.
FIG. 3 is a schematic diagram of the internal structure of an on-vehicle HUD according to an example embodiment of the present invention.
FIG. 4 is a schematic diagram of an image displayed by an on-vehicle HUD according to an example embodiment of the present invention.
FIG. 5 is a front view of a MEMS mirror that serves as the optical scanner of an on-vehicle HUD, according to an example embodiment of the present invention.
FIG. 6 illustrates how the virtual image that is formed by the projection light emitted from a microlens array of an on-vehicle HUD is visually recognized at three different viewpoints, which is viewed from the sub-scanning direction, according to an example embodiment of the present invention.
FIG. 7 is a schematic diagram of the divergence angle (solid line) of the projection light emitted from a microlens array and the divergence angle (dotted line) of the projection light that reaches a viewpoint range, according to an example embodiment of the present invention.

The accompanying drawings are intended to depict exemplary embodiments of the present disclosure and should not be interpreted to limit the scope thereof. The accompanying drawings are not to be considered as drawn to scale unless explicitly noted.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

An on-vehicle heads-up display (HUD) according to an example embodiment of the present invention, which serves as an image display apparatus, is described below. Although an on-vehicle HUD will be described in the following description, no limitation is intended thereby. The HUD according to an example embodiment of the present invention may be applied to a wide range of field, for example, as an image display apparatus used for playing films. In particular, the image display apparatus according to an embodiment of the present invention is used to configure an image display system in combination with an apparatus (e.g., a mobile object such as an aircraft or ship, or an immobile object) provided with a light-transmissive to-be-projected member that reflects the image light projected from the image display apparatus so as to allow an observer to visually recognize the image. In the present example embodiment described below, for example, an image display system for a car is described in which an on-vehicle HUD according to an example embodiment of the present invention, which serves as an image display apparatus, and a car 301 that is a mobile object are utilized in combination.

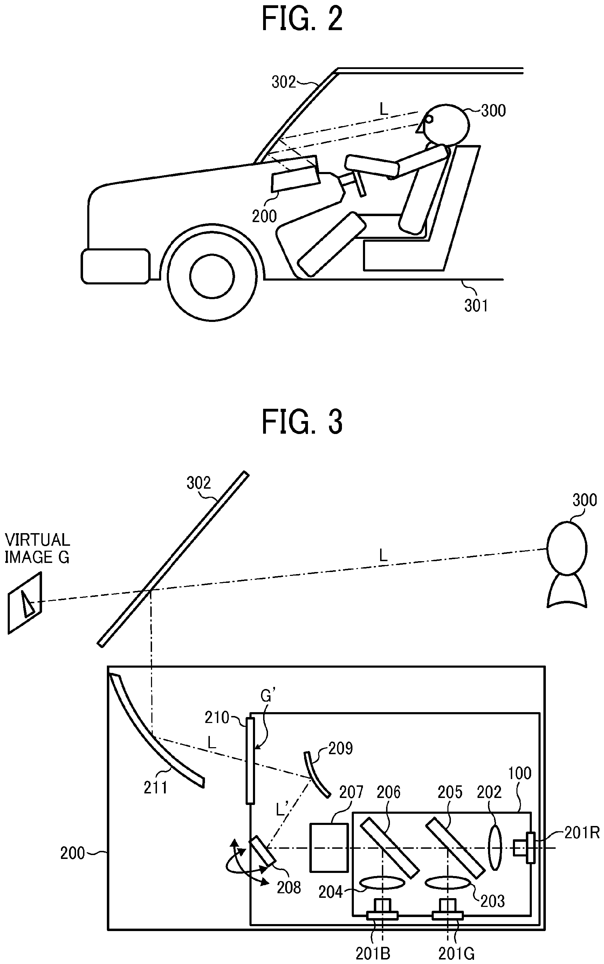

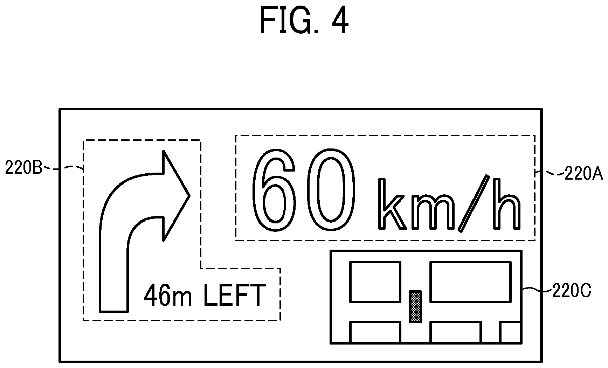

FIG. 2 is a schematic diagram of a car for which the on-vehicle HUD according to the present example embodiment is provided. FIG. 3 is a schematic diagram of the internal structure of the on-vehicle HUD according to the present example embodiment. The on-vehicle HUD 200 the present example embodiment is disposed, for example, in the dashboard of the car 301. The projection light L, which is the light for projecting an image, that is emitted from the on-vehicle HUD 200 disposed in the dashboard is reflected at a front windshield 302 that serves as a to-be-projected member, and is headed for a driver 300. Accordingly, the driver 300 who is supposed to observe an image can visually recognize, for example, a navigation image as illustrated in FIG. 4 as a virtual image. Note that a combiner may be disposed on the inner wall of the front windshield 302, and the driver 300 may visually recognizes a virtual image formed by the projection light L that is reflected at the combiner.

On the image illustrated in FIG. 4, the speed of the car 301 (i.e., the image of "60 km/h" in the example of FIG. 4) is displayed in a first display area 220A. Moreover, a navigation image generated by a car navigation device is displayed in a second display area 220B. In the example of FIG. 4, a right-turn indicator image that indicates the direction of turning at the next corner, and the image "46m LEFT" that indicates the distance to the next corner are displayed as the navigation image. In a third display area 220C, a map image generated by the car navigation device (i.e., the map image around the vehicle) is displayed

The on-vehicle HUD 200 includes red, green, and blue laser beam sources 201R, 201G, and 201B, collimator lenses 202, 203, and 204 that are provided for the laser beam sources 201R, 201G, and 201B, respectively, two dichroic mirrors 205 and 206, a light quantity adjuster 207, an optical scanner 208, a free-form surface mirror 209, a microlens array 210 that serves as a light dispersing member, and a projector mirror 211 that serves as a light reflecting member. A light source unit 100 according to the present example embodiment includes the laser beam sources 201R, 201G, and 201B, the collimator lenses 202, 203, and 204, and the dichroic mirrors 205 and 206, and these elements are unitized by an optical housing.

The on-vehicle HUD 200 according to the present example embodiment projects the intermediate image formed on the microlens array 210 to the front windshield 302 of the car 301, such that the driver 300 can visually recognize the magnified intermediate image as a virtual image. The laser beams of RGB colors emitted from the laser beam sources 201R, 201G, and 201B are approximately collimated by the collimator lenses 202, 203, and 204, and are combined by the two dichroic mirrors 205 and 206. The light quantity of the combined laser beam is adjusted by the light quantity adjuster 207, and then the adjusted laser beam is two-dimensionally scanned by the mirror of the optical scanner 208. The scanned light L' that is two-dimensionally scanned by the optical scanner 208 is reflected at the free-form surface mirror 209 so as to correct the distortion, and then is collected and condensed to the microlens array 210. Accordingly, an intermediate image is formed.

In the present example embodiment, the microlens array 210 is used as a light dispersing member that individually disperses the laser-beam bundle of each pixel of the intermediate image (i.e., each point of the intermediate image).

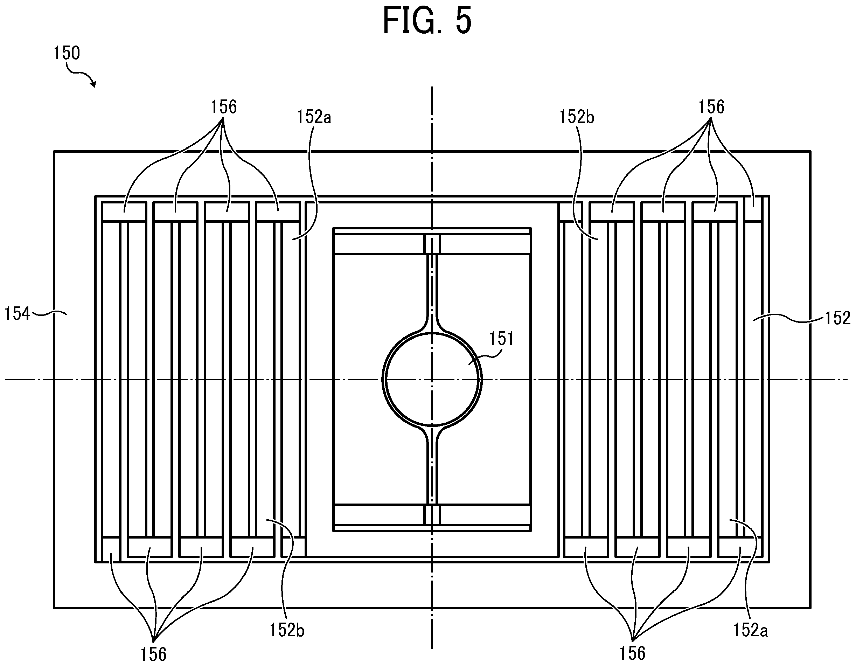

The optical scanner 208 uses a known actuator driver system to incline the mirror to the main-scanning direction and the sub-scanning direction, and two-dimensionally scans (raster-scans) the laser beams that enter the mirror. FIG. 5 is a front view of a micro-electromechanical systems (MEMS) mirror 150 that is an example of the optical scanner 208, according to the present example embodiment. The MEMS mirror 150 is produced by semiconductor processing, and is provided with a mirror 151. The mirror 151 is provided with a reflection plane and a pair of serpentine beams 152 including a plurality of turning portions. Each of the serpentine beams 152 is divided into first beams 152a and second beams 152b that alternate, and these beams are supported by a frame member 154.

Each pair of the neighboring beams 152a and 152b of the serpentine beam 152 are provided with an independent piezoelectric material 156 made of, for example, lead zirconate titanate (PZT), at both ends the pair of the beams 152a and 152b. The piezoelectric materials 156 are applied with voltages such that the pair of the voltages applied to the neighboring two piezoelectric materials 156 are different from each other. Accordingly, the neighboring two beams 152a and 152b bend in different directions. As the bending power is accumulated, the mirror 151 rotates in the vertical direction with a wide angle. Due to such configuration as described above, optical scanning can be performed with low voltage around the vertical axis of FIG. 5 in the vertical direction. On the other hand, around the horizontal axis of FIG. 5 in the horizontal direction, the optical scanning with resonance is performed using, for example, a torsion bar that is connected to the mirror 151. The mirror 151 is controlled in synchronization with the timing in which the laser beam sources 201R, 201G, and 201B emit light.

The configuration of the optical scanner 208 is not limited to the present example embodiment described above, but the optical scanner 208 may be configured, for example, by a mirror system that includes two mirrors that pivot or rotate around the two axes that are orthogonal to each other.

According to the present example embodiment, the main-scanning direction is parallel to the longer-side direction of an intermediate image, and the sub-scanning direction is parallel to the shorter-side direction of the intermediate image. According to the present example embodiment, the intermediate image is oblong, and thus the main-scanning direction and the sub-scanning direction are in the horizontal direction and the vertical direction, respectively.

As known in the art, the front windshield 302 is curved, and is oblique to a specific direction with reference to the incidence direction of the projection light L. Accordingly, a virtual image that is formed by the projection light L as reflected at the front windshield 302 is optically distorted with reference to the intermediate image. Moreover, optical distortion may be caused due to the property of the various kinds of optical elements existing in the optical path. According to the present example embodiment, optical distortion where the horizontal line of the intermediate image (i.e., the straight line that extends in the lateral direction of the intermediate image) becomes convex to the upward or downward direction is corrected by adjusting the shape of the reflection plane of the free-form surface mirror 209. The optical distortion where the lateral direction of the virtual image becomes oblique to the horizontal direction as the virtual image that is formed by the projection light L as reflected at the front windshield 302 rotates in its entirety may be corrected, for example, by adjusting the scanning direction of the optical scanner 208 such that the lateral direction of the intermediate image become oblique to the horizontal direction in advance in the formation of the intermediate image. Moreover, the optical distortion where the entire image is deformed and shaped like a parallelogram may be corrected by performing image processing.

A virtual image G that is formed by the on-vehicle HUD 200 according to the present example embodiment is visually recognized by the driver 300 as the laser-beam bundle emitted from each of the pixels of an intermediate image G' enters the eyes of the driver 300. Note that the position of the viewpoint (i.e., the positions of the eyes of the driver 300) varies as the driver 300 who sits on the driver's seat of the car changes. Even with the same driver 300, the viewpoint (i.e., the positions of the eyes of the driver 300) varies, for example, due to a difference in sitting posture of the driver 300. It is desired that the virtual image G formed by the on-vehicle HUD 200 be appropriately recognized by the driver 300 even when the position of the viewpoint of the driver changes to some extent as described above.

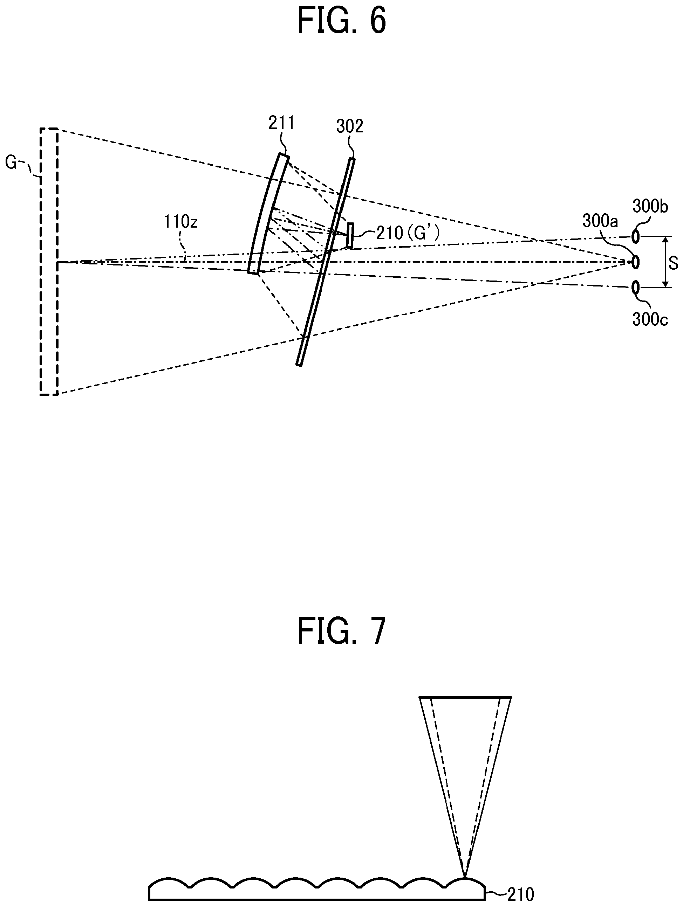

FIG. 6 illustrates how the virtual image G (i.e., the magnified image of the intermediate image G') that is formed by the projection light L emitted from the micro lens array 210 is visually recognized at three different viewpoints 300a, 300b, and 300c, which is viewed from the sub-scanning direction, according to the present example embodiment. The three viewpoints 300a, 300b, and 300c illustrated in FIG. 6 consist of the viewpoint 300a that is positioned in the center of a prescribed viewpoint range S in the main-scanning direction, and the viewpoints 300b and 300c that are positioned at both ends of the viewpoint range S. The dot-and-dash line illustrated in FIG. 6 indicates the laser-beam bundle that is emitted from the center in the main-scanning direction (center pixel) of the intermediate image G' formed on the microlens array 210.

In the present example embodiment, the laser-beam bundle that is emitted from each pixel of the intermediate image G' is dispersed by the microlens array 210 such that the virtual image G can visually be recognized at all of these three viewpoints 300a, 300b, and 300c. However, if the divergence angle is too wide when the laser-beam bundle is dispersed, the amount of the laser-beam bundle that enters the viewpoints 300a, 300b, and 300c decreases with reference to all the laser-beam bundles emitted from the center in the main-scanning direction (center pixel) of the intermediate image G'. Ideally, all the laser-beam bundles emitted from the center in the main-scanning direction (center pixel) of the intermediate image G' disperse throughout the entire range of the viewpoint range S without dispersing outside the viewpoint range S. If the laser-beam bundles ideally disperse as above, all the laser-beam bundles emitted from the center in the main-scanning direction (center pixel) of the intermediate image G' can enter all the viewpoints in the viewpoint range S, and contribute to the display of an image that is visually recognized from the viewpoints in the viewpoint range S with little loss.

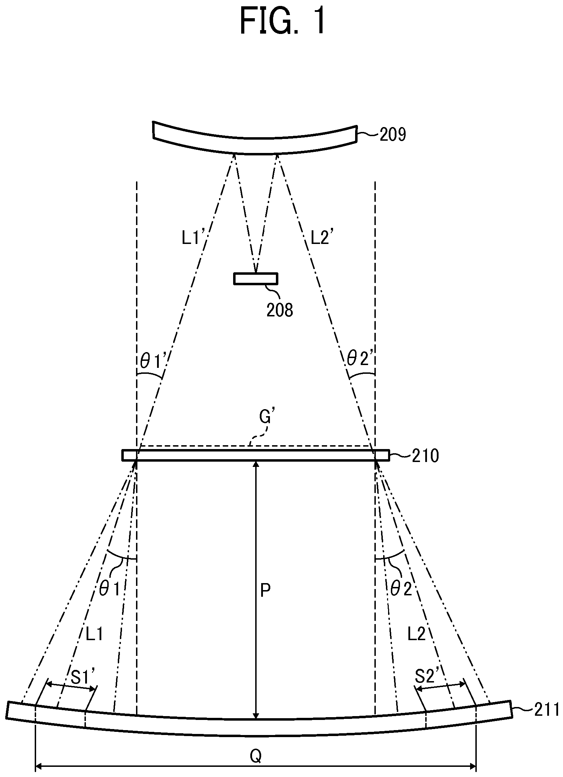

FIG. 1 is a schematic diagram of the optical path of the scanned light L' that is scanned by the optical scanner 208, and then is dispersed by the microlens array 210 so as to enter the projector mirror 211, which is viewed from the sub-scanning direction, in the on-vehicle HUD according to the present example embodiment. In FIG. 1, the scanned lights L1' and L2', which are indicated by dot-and-dash lines, indicate the edge laser-beam bundles that are emitted from the edges (edge pixels) in the main-scanning direction of the intermediate image G' formed on the microlens array 210. The central light beams L1 and L2 of the edge laser-beam bundles, which are indicated by dot-and-dash line, indicate the projection light dispersed and emitted from the microlens array 210. The dot-dot-dash lines of the projection light indicate a range of the dispersion of the edge laser-beam bundles that are dispersed and emitted from the microlens array 210. In FIG. 1, ranges S1' and S2' indicates the ranges of the edge laser-beam bundles that enter the viewpoint range S after being reflected at the projector mirror 211.

The divergence angle of the laser-beam bundle emitted from the microlens array 210 varies according to the incidence angle of the scanned light L' that enters the microlens array 210, and thus varies according to the arrangement of the pixels of the intermediate image G'. More specifically, as the incidence angle of the scanned light L' that enters the microlens array 210 is greater, the divergence angle of the laser-beam bundle that is emitted from the microlens array 210 becomes greater. For this reason, the laser-beam bundle that is emitted from portions of the intermediate image near the edges in the main-scanning direction, where the incidence angle is wide, has a divergence angle greater than that of the laser-beam bundle that is emitted from portions of the intermediate image near the center in the main-scanning direction. Accordingly, the amount of the laser-beam bundle that is emitted from portions of the intermediate image near the edges in the main-scanning direction and enters the viewpoint range S is small. Moreover, the laser-beam bundle that is emitted from portions of the intermediate image near the edges in the main-scanning direction, where the incidence angle is wide, has a wide incidence angle when entering the reflection planes of the projector mirror 211 or the front windshield 302. Accordingly, the amount of the laser-beam bundle that is emitted from portions of the intermediate image near the edges in the main-scanning direction and enters the viewpoint range S is small.

As described above, the amount of the laser-beam bundle that is emitted from portions of the intermediate image near the edges in the main-scanning direction and enters the viewpoint range S is smaller than that of the laser-beam bundle that is emitted from portions of the intermediate image near the center in the main-scanning direction and enters the viewpoint range S. Accordingly, portions of the virtual image near the edges in the main-scanning direction become relatively dark.

In the present example embodiment, the light reflecting member of the projection optical system is only the projector mirror 211, and the optical path length between the exit plane of the microlens array 210 and the reflection plane of the projector mirror 211 is made short. Accordingly, the projection optical system is downsized. More specifically, as illustrated in FIG. 1, the length Q in the main-scanning direction of an area that the laser-beam bundle of the intermediate image G' emitted from the microlens array 210 and later entering the viewpoint range S enters the reflection plane of the projector mirror 211 is arranged so as to be greater than the optical path length P between the exit plane of the microlens array 210 and the reflection plane of the projector mirror 211.

In such arrangement, the laser-beam bundle that is emitted from portions of the intermediate image near the edges in the main-scanning direction has a relatively wide incidence angle when entering the projector mirror 211. When the diameter of laser-beam bundle on the projector mirror 211 emitted from the intermediate image G' is large, the amount of the laser-beam bundle that enters the viewpoint range S after being reflected at the projector mirror 211 becomes small. Such a diameter of laser-beam bundle becomes greater as the incidence angle on the projector mirror 211 is greater. In the present example embodiment, in order to downsize the projection optical system, the laser-beam bundle that is emitted from portions of the intermediate image near the edges in the main-scanning direction has a wide incidence angle when entering the projector mirror 211. In particular, portions of the virtual image near the edges in the main-scanning direction tend to become relatively dark.

In order to avoid such situation, in the present example embodiment, the scanning optical system is arranged such that the central light beams L1 and L2 of the edge laser-beam bundle from the edges in the main-scanning direction (edge pixel) of the intermediate image G', which exit from the microlens array 210, head for a central range within prescribed distance from the center of the viewpoint range S in the main-scanning direction. In the present example embodiment, it is assumed that central range is within a range of, for example, equal to or less than 75 mm from the center of the viewpoint range S, with reference to the distance between two eyes of human. When the central range is limited to the range as above, by adjusting the divergence angle of the edge laser-beam bundle that is emitted from the microlens array 210, portions of the virtual image G at the edges in the main-scanning direction can visually be recognized with sufficient brightness, in the viewpoint range S of the on-vehicle HUD 200.

In the central range of the viewpoint range S towards which the central light beams L1 and L2 of the edge laser-beam bundles are directed, the distance from the center of the viewpoint range S is adjusted according to the demanded image quality or the like. Among the laser-beam bundles of the pixels of the intermediate image G' emitted from the microlens array 210, the central light beams of the laser-beam bundles of edge pixels are at a great disadvantage in heading for the central range of the viewpoint range S. For this reason, when the central light beams L1 and L2 of the edge laser-beam bundles are arranged so as to head for the central range of the viewpoint range S as in the present example embodiment, the central light beams of the laser-beam bundles of the other pixels also head for central range. In other words, high brightness is achieved for all the pixels in the viewpoint range S by adjusting the divergence angle.

In the present example embodiment, a laser beam scanning system in which an intermediate image is formed by two-dimensionally scanning a laser beam is used as a method of forming the intermediate image G'. As a laser beam has high directivity, the central light beams L1 and L2 of the edge laser-beam bundles are easily arranged so as to head for the central range of the viewpoint range S, by adjusting the arrangement or properties of the optical elements of the optical system. In the present example embodiment, the scanning optical system uses the optical scanner 208 to scan light for projecting an image emitted from the light source and forms an intermediate image on the microlens array 210. In the present example embodiment, the projection optical system projects the light for projecting an image that is emitted from the microlens array 210.

In the present example embodiment, the scanning optical system is arranged such that equal to or more than fifty percent of the edge laser-beam bundle from the edges of the intermediate image G' in the main-scanning direction heads for within the viewpoint range S. Accordingly, the edge laser-beam bundles that are emitted from the microlens array 210 efficiently contribute to the display of an image that is visually recognizable through the viewpoint range S. As a result, portions of the virtual image G at the edges in the main-scanning direction can visually be recognized with sufficient brightness, in the viewpoint range S of the on-vehicle HUD 200.

More specifically, in the present example embodiment, as illustrated in FIG. 7, the divergence angle of the edge laser-beam bundle emitted from the microlens array 210 (i.e., the angle which the two points indicating the half value of the light quantity of the central light beam (maximum light quantity) form when viewed from the exit point on the microlens array 210) is set to forty degrees. Moreover, in the present example embodiment, the angle of thirty degrees of the edge laser-beam bundle emitted from the microlens array 210 (i.e., the angle which the two points of equal distances from the central light beam in the main-scanning direction form when viewed from the exit point on the microlens array 210) is arranged so as to enter the viewpoint range S. In the arrangement described above, the solid angle of forty degrees is 0.38 sr and the solid angle of thirty degrees is 0.22 sr, and thus the ratio of the laser-beam bundle that enters the viewpoint range S, out of the edge laser-beam bundle that is emitted from the microlens array 210 (all the laser-beam bundles), is about fifty-seven percent (0.22/0.38^{∗}100).

As illustrated in FIG. 7, the divergence angle of the edge laser-beam bundle that is emitted from the microlens array 210, which is determined by the shape of the microlens array 210 and is indicated by solid lines in FIG. 7, has a relatively small difference from the divergence angle of the laser-beam bundle that reaches the viewpoint, which is determined by the design of the projection optical system and is indicated by dotted lines in FIG. 7. As a result, according to the present example embodiment, the utilization efficiency of light is increased to about fifty-seven percent, and the reduction in the utilization efficiency of light is prevented.

As described above, the laser beam scanning system is used in the present example embodiment. With the laser beam scanning system in which a laser beam of high directivity is used as light for projecting an image that enters the microlens array 210, the divergence angle of the projection light L that is emitted from the microlens array 210 can be easily set to 30 degree, which is relatively narrow range.

In a comparative example, a liquid crystal display (LCD) or a vacuum fluorescent display (VFD) may be used as a method of forming the intermediate image G'. However, in LCDs and VFDs, light sources are arranged in a planar manner, and the directions of the center of the divergence of the light sources are all parallel to the normal line to the surface of the plane. Moreover, in LCDs and VFDs, the divergence angle is as wide as equal to or greater than sixty degrees as known in the art. For this reason, it is very difficult to arrange the scanning optical system such that equal to or more than fifty percent of the edge laser-beam bundle from the edges of the intermediate image G' in the main-scanning direction heads for within the viewpoint range S.

Among the laser-beam bundles of the pixels of the intermediate image G' emitted from the microlens array 210, the laser-beam bundles of edge pixels are at a great disadvantage in heading for the central range of the viewpoint range S. For this reason, when the scanning optical system is arranged such that equal to or more than fifty percent of the edge laser-beam bundle heads for within the viewpoint range S as in the present example embodiment, the laser-beam bundles of the other pixels head for central range with even higher percentage. Accordingly, high brightness is achieved for all the pixels in the viewpoint range S.

In the present example embodiment, when the scanning optical system is arranged such that the central light beams L1 and L2 of the edge laser-beam bundle of the intermediate image G', which exit from the microlens array 210, head for a central range of the viewpoint range S, or when the scanning optical system is arranged such that equal to or more than fifty percent of the edge laser-beam bundle of the intermediate image G' heads for within the viewpoint range S, it is desired that the scanning optical system be designed or adjusted as follows. That is, as illustrated in FIG. 1, it is desired that the scanning optical system be designed or adjusted such that the incidence angles θ1' and θ2' of the scanned light L1' and L2' of the edge laser-beam bundles to the microlens array 210 approximately match the exiting angles θ1 and θ2 of the central light beams L1 and L2 of the projection light of the edge laser-beam bundles that are emitted from the micro lens array 210. By designing or adjusting the scanning optical system as described above, the central light beams L1 and L2 of the edge laser-beam bundle of the intermediate image G', which exit from the micro lens array 210, head for a central range of the viewpoint range S, and equal to or more than fifty percent of the edge laser-beam bundle of the intermediate image G' heads for within the viewpoint range S.

The incidence angles θ1' and θ2' of the scanned light L1' and L2' of the edge laser-beam bundles to the microlens array 210 may be changed by setting the reflection angle at the optical scanner 208 as desired, or by changing the three-dimensional shape of the reflection plane of the free-form surface mirror 209, the position of the free-form surface mirror 209, or the like.

Note that in scanning systems not part of the invention, the free-form surface mirror 209 is not an essential element. In fact, the free-form surface mirror 209 is rather unwanted in view of the simplification and downsizing of the scanning optical system. For this reason, the free-form surface mirror 209 may be excluded, or a planar mirror or the like may be used in place of the free-form surface mirror 209.

However, the free-form surface mirror 209 having a reflection plane with approximately convex surface is effective in increasing the width on the microlens array 210 in the main-scanning direction, in the limited optical path length between the optical scanner 208 and the microlens array 210, with reference to the limited range of the scanning angle of the optical scanner 208. Without the free-form surface mirror 209, the length in the main-scanning direction of the intermediate image G' becomes small, and a greater magnifying power is required for the projection optical system in order to achieve the same screen width (i.e., the length in the main-scanning direction of the virtual image G). In such cases, it is desired that the microlens array 210 and the projector mirror 211 get closer to each other in the projection optical system, and that the diffusion angle of the microlens array 210 be greater. In such cases, even though the incidence angle of the scanned light L' that enters the microlens array 210 is small, but the exiting angle of the projection light L that is emitted from the microlens array needs to be increased. Accordingly, it is very difficult to design the scanning optical system such that the incidence angles θ1' and θ2' of the scanned light L1' and L2' of the edge laser-beam bundles to the microlens array 210 approximately match the exiting angles θ1 and θ2 of the central light beams L1 and L2 of the projection light of the edge laser-beam bundles that are emitted from the microlens array 210. For the above reasons, the free-form surface mirror 209 having a reflection plane with approximately convex surface is included in the scanning optical system according to the present example embodiment.

In the present example embodiment, in the laser-beam bundles of the pixels of the intermediate image G' including the edge laser-beam bundles, the three-dimensional shape of the reflection plane of the free-form surface mirror 209 is designed such that the incidence angles θ1' and θ2' of the scanned light L1' and L2' to the micro lens array 210 approximately match the exiting angles θ1 and θ2 of the central light beams L1 and L2 of the projection light that are emitted from the microlens array 210. More specifically, the reflection plane of the free-form surface mirror 209 is not a simple spherical surface, but is a rotationally symmetrical aspherical surface or a free-form surface. For example, when a free-form surface composed of a two-dimensional polynomial surface is used, it become possible to approximately match the incidence angles θ1' and θ2' to the exiting angles θ1 and θ2, with respect to the laser-beam bundles of the pixels of the intermediate image G', and the image-forming properties of the scanned light L' improve.

In the scanning optical system according to the present example embodiment, the free-form surface mirror 209 that is a convex mirror is the only curved mirror. However, no limitation is indicated thereby, and the scanning optical system may include a plurality of curved mirrors. By using a plurality of curved mirrors, it may become easier to further optimize downsizing, image-forming properties, and light beam angles. For example, one curved mirror functions to form the intermediate image G' on the microlens array 210, and another curved mirror functions to adjust the incidence angles θ1' and θ2' to the microlens array 210. However, it is disadvantageous to downsizing if the image-forming properties and the incidence angles are adjusted in a completely separate manner for each of the curved mirrors. For this reason, it is desired that the scanning optical system be optimized in its entirety with a single mirror (i.e., the free-form surface mirror 209) that has highly-flexible free-form surface.

The embodiments described above are given as an example, and advantageous effects are achieved for each of the following modes A to H.

### <Mode A>

An image display apparatus ,such as the on-vehicle HUD 200 that enables an observer such as the driver 300 to visually recognize an image within a specified viewpoint range S, includes a light source such as laser beam sources 201R, 201G, and 201B configured to emit light for projecting an image based on prescribed image data, a light dispersing member such as the microlens array 210 configured to disperse the laser-beam bundle of the light for projecting an image, a scanning optical system configured to scan the image light with an optical scanner such as the optical scanner 208 in a main-scanning direction and a sub-scanning direction that is orthogonal to the main-scanning direction, to form an intermediate image G' on the light dispersing member, and a projection optical system configured to project the image light dispersed from the light dispersing member to a to-be-projected member that is light-transmissive such as the front windshield 302, and to reflect and guide the image light to within the specified viewpoint range S, where the scanning optical system is arranged such that central light beams L1 and L2 of edge laser-beam bundles from edges of the intermediate image G' in the main-scanning direction, which exit from the light dispersing member, head for a central range within prescribed distance from the center of the viewpoint range S in the main-scanning direction.

In the mode A, the central light beams L1 and L2 of edge laser-beam bundles from edges of the intermediate image in the main-scanning direction, which exit from the light dispersing member, head for a central range within prescribed distance from the center of the viewpoint range S in the main-scanning direction. The amount of the laser-beam bundle that is dispersed and emitted from the light dispersing member is greater as the laser-beam bundle is closer to the central light beam. For this reason, according to the mode A, portions of the laser-beam bundle whose amount of light is greater are guided to within the viewpoint range S on a priority basis, and the portions of the laser-beam bundle that goes out of the viewpoint range S has a relatively small amount of light. As a result, relative reduction in brightness near the edges in the main-scanning direction of the image can be prevented.

Moreover, in the mode A, the central light beams of the edge laser-beam bundles, which exit from the light dispersing member, are arranged so as to head for the central range of the viewpoint range S, by adjusting the arrangement or layout of the optical elements of the scanning optical system. Accordingly, upsizing of the light dispersing member can be prevented.

### <Mode B>

An image display apparatus ,such as the on-vehicle HUD 200 that enables an observer such as the driver 300 to visually recognize an image within a specified viewpoint range S, includes a light source such as laser beam sources 201R, 201G, and 201B configured to emit light for projecting an image based on prescribed image data, a light dispersing member such as the micro lens array 210 configured to disperse the laser-beam bundle of the light for projecting an image, a scanning optical system configured to scan the image light with an optical scanner such as the optical scanner 208 in a main-scanning direction and a sub-scanning direction that is orthogonal to the main-scanning direction, to form an intermediate image G' on the light dispersing member, and a projection optical system configured to project the image light dispersed from the light dispersing member to a to-be-projected member that is light-transmissive such as the front windshield 302, and to reflect and guide the image light to within the specified viewpoint range S, where the scanning optical system is arranged such that equal to or more than fifty percent of edge laser-beam bundles from edges of the intermediate image G' in the main-scanning direction heads for within the viewpoint range S.

In the mode B, equal to or more than fifty percent of the edge laser-beam bundle from the edges of the intermediate image G' in the main-scanning direction heads for within the viewpoint range S. Accordingly, the ratio of the portions of the laser-beam bundle that go out of the viewpoint range S is small, and relative reduction in brightness near the edges in the main-scanning direction of the image can be prevented.

### <Mode C>

In the mode A or the mode B, the light reflecting member of the projection optical system is only the projector mirror 211, and the length Q in the main-scanning direction of an area that the image light such as the projection light L emitted from the light dispersing member and then guided to within the viewpoint range enters a reflection plane of the light reflecting member is arranged so as to be greater than the optical path length P between an exit plane of the light dispersing member and the reflection plane of the light reflecting member.

Accordingly, high magnifying power is achieved in the projection optical system, and upsizing of the screen is also achieved. Moreover, the optical path length P between the exit plane of the light dispersing member and the reflection plane of the light reflecting member is shortened, and the projection optical system is downsized.

### <Mode D>

In any one the modes A to C, a portion of the edge laser-beam bundle within a range of a half value width after exiting from the light dispersing member, out of the edge laser-beam bundle from the edges in at least one of the main-scanning direction and the sub-scanning direction of the intermediate image G', enters the reflection plane of the light reflecting member.

Accordingly, substantially all the laser-beam bundles that exit from the light dispersing member can be reflected at the light reflecting member and be guided to within the viewpoint range. As a result, wasteful laser-beam bundle that does not contribute to the image display is eliminated, and image display with higher brightness is achieved.

### <Mode E>

In any one the modes A to D, the scanning optical system includes a convex mirror such as the free-form surface mirror 209 configured to reflect the image light such as the scanned light L' that is scanned by the optical scanner. According to the mode E, the scanning width on the light dispersing member increases, in the limited optical path length between the optical scanner and the light dispersing member, with reference to the limited range of the scanning angle of the optical scanner. As a result, the magnifying power required for the projection optical system can be reduced to a lower degree.

Accordingly, it becomes easy to approximately match the incidence angles θ1' and θ2' of the edge laser-beam bundles to the light dispersing member to the exiting angles θ1 and θ2 of the central light beams L1 and L2 of the projection light of the edge laser-beam bundles that are emitted from the light dispersing member. As a result, it becomes easy to arrange the scanning optical system such that the central light beams L1 and L2 of the edge laser-beam bundle, which exit from the light dispersing member, head for a central range of the viewpoint range S. Moreover, it becomes easy to arrange the scanning optical system such that equal to or more than fifty percent of the edge laser-beam bundle heads for within the viewpoint range S.

### <Mode F>

In the mode E, a reflection plane of the convex mirror has a three-dimensional shape that guides central light beams of laser-beam bundles from a plurality of positions on the intermediate image G' in the main-scanning direction, which exit from the light dispersing member, to the central range of the viewpoint range S.

Accordingly, by designing or adjusting the three-dimensional shape of a reflection plane of the convex mirror of the scanning optical system, the central light beams of laser-beam bundles from a plurality of positions on the intermediate image G' in the main-scanning direction, which exit from the light dispersing member, can be guided to the central range of the viewpoint range S. Accordingly, image display with high brightness is achieved for the entire image.

### <Mode G>

In the mode E or the mode F, a reflection plane of the convex mirror has a three-dimensional shape that guides equal to or more than fifty percent of the edge laser-beam bundles from the edges of the intermediate image in the main-scanning direction to within the viewpoint range.

Accordingly, by designing or adjusting the three-dimensional shape of a reflection plane of the convex mirror of the scanning optical system, equal to or more than fifty percent of the edge laser-beam bundles from the edges of the intermediate image G' in the main-scanning direction can be guided to within the viewpoint range S. Accordingly, image display with high brightness is achieved for the entire image.

### <Mode H>

An image display system includes an image display apparatus such as the on-vehicle HUD 200 according to any one the modes A to G, and a mobile object such as the car 301 for which a to-be-projected member such as the front windshield 302 is provided, wherein the to-be-projected member reflects the image light projected from the image display apparatus to enable an observer such as the driver 300 to visually recognize the reflected image light.

Accordingly, an image display system in which large-size image and downsizing of the image display apparatus are both achieved can be obtained while suppressing loss in brightness near the edges of an image.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of the appended claims.

## Claims

1. An image display apparatus (200) that enables an observer to visually recognize an image within a specified viewpoint range (S), the image display apparatus (200) comprising:
a light source (201) configured to emit an image light based on prescribed image data;
a light dispersing member (210) comprising a microlens array configured to disperse a laser-beam bundle of the image light;
a scanning optical system (201, 208, 210) configured to scan the image light with an optical scanner (208) in a main-scanning direction and a sub-scanning direction that is orthogonal to the main-scanning direction, to form an intermediate image (G') on the light dispersing member (210); and
a projection optical system (211) configured to project the image light dispersed from the light dispersing member (210) to a to-be-projected member (302) that is light-transmissive, and to reflect and guide the image light to within the specified viewpoint range (S),
wherein the projection optical system (211) includes only one light reflecting member,
wherein length (Q) in the main-scanning direction of an area that the image light emitted from the light dispersing member (210) and then guided to within the viewpoint range (S) enters a reflection plane of the light reflecting member is arranged so as to be greater than optical path length (P) between an exit plane of the light dispersing member (210) and the reflection plane of the light reflecting member,
wherein the scanning optical system (201, 208, 210) includes a convex mirror (209) configured to reflect the image light that is scanned by the optical scanner (208), wherein a reflection plane of the convex mirror (209) has a rotationally symmetrical aspherical surface or a free-form surface designed such that the incidence angles (θ1' and θ2') of the scanned light (L1' and L2') to the microlens array (210) approximately match the exiting angles (θ1 and θ2) of the edge central light beams (L1 and L2) of the projection light that are emitted from the microlens array (210) in the main-scanning direction,
wherein the scanning optical system (201, 208, 210) is arranged such that all the laser-beam bundles emitted from the center in the main-scanning direction of the intermediate image (G') disperse throughout the entire range of the viewpoint range (S) without dispersing outside the viewpoint range (S),
wherein:
(a) the scanning optical system (201, 208, 210) is arranged such that central light beams of edge laser-beam bundles from edges of the intermediate image (G') in the main-scanning direction, which exit from the light dispersing member (210), head for a central range of the viewpoint range (S) within prescribed distance from a center of the viewpoint range (S) in the main-scanning direction, or
(b) the scanning optical system (201, 208, 210) is arranged such that equal to or more than fifty percent of edge laser-beam bundles from edges of the intermediate image (G') in the main-scanning direction heads for within the viewpoint range (S).

2. The image display apparatus (200) according to claim 1, wherein a portion of the edge laser-beam bundle within a range of a half value width after exiting from the light dispersing member (210), out of the edge laser-beam bundles from the edges of the intermediate image (G') in at least one of the main-scanning direction and the sub-scanning direction, enters the reflection plane of the light reflecting member.

3. The image display apparatus (200) according to any one of claims 1 and 2, wherein the prescribed distance is 75mm.

4. An image display system comprising:
the image display apparatus (200) according to any one of claims 1 to 3; and
a to-be-projected member (302),
wherein the to-be-projected member (302) reflects the image light projected from the image display apparatus (200) to enable an observer to visually recognize the reflected image light.

## Patentansprüche

1. Bildanzeigevorrichtung (200), die es einem Beobachter ermöglicht, ein Bild innerhalb eines spezifizierten Betrachtungsbereichs (S) visuell zu erkennen, wobei die Bildanzeigevorrichtung (200) Folgendes umfasst:
eine Lichtquelle (201), die konfiguriert ist, um ein auf vorgeschriebenen Bilddaten basiertes Bildlicht abzugeben;
ein lichtstreuendes Element (210), das eine Mikrolinsenanordnung umfasst, die konfiguriert ist, um
ein Laserstrahlbündel des Bildlichts zu zerstreuen;
ein optisches Abtastsystem (201, 208, 210), das konfiguriert ist, um das Bildlicht mit einer optischen Abtastvorrichtung (208) in einer Hauptabtastrichtung und einer untergeordneten Abtastrichtung, die orthogonal zur Hauptabtastrichtung ist, abzutasten, um ein Zwischenbild (G') auf dem lichtstreuenden Element (210) zu bilden; und
ein optisches Projektionssystem (211), das konfiguriert ist, um das Bildlicht, das von dem lichtstreuenden Element (210) zerstreut wird, auf ein zu projizierendes Element (302), das lichtdurchlässig ist, zu projizieren, und das Bildlicht zu reflektieren und in den spezifizierten Betrachtungsbereich (S) zu leiten,
wobei das optische Projektionssystem (211) nur ein lichtreflektierendes Element umfasst,
wobei die Länge (Q) in der Hauptabtastrichtung eines Bereichs, den das Bildlicht, das von dem lichtstreuenden Element (210) abgegeben wird und anschließend in den Betrachtungsbereich (S) geleitet wird, in eine Reflexionsebene des lichtreflektierenden Elements eintritt, so angeordnet ist, dass sie größer ist als die optische Pfadlänge (P) zwischen einer Austrittsebene des lichtstreuenden Elements (210) und der Reflexionsebene des lichtreflektierenden Elements,
wobei das optische Abtastsystem (201, 208, 210) einen konvexen Spiegel (209) umfasst, der konfiguriert ist, um das Bildlicht, das von der optischen Abtastvorrichtung (208) abgetastet wird, zu reflektieren, wobei eine Reflexionsebene des konvexen Spiegels (209) eine rotationssymmetrische asphärische Oberfläche oder eine Freiformfläche aufweist, die so ausgebildet ist, dass die Einfallswinkel (θ1' und θ2') des abgetasteten Lichts (L1' und L2') auf die Mikrolinsenanordnung (210) ungefähr mit den Austrittswinkeln (θ1 und θ2) der zentralen Randlichtstrahlen (L1 und L2) des Projektionslichts, die von der Mikrolinsenanordnung (210) in der Hauptabtastrichtung abgegeben werden, übereinstimmen,
wobei das optische Abtastsystem (201, 208, 210) so angeordnet ist, dass alle Laserstrahlbündel, die von dem Zentrum in der Hauptabtastrichtung des Zwischenbilds (G') abgegeben werden, über den gesamten Bereich des Betrachtungsbereichs (S) zerstreut werden, ohne außerhalb des Betrachtungsbereichs (S) zerstreut zu werden,
wobei:
(a) das optische Abtastsystem (201, 208, 210) so angeordnet ist, dass zentrale Lichtstrahlen von Rand-Laserstrahlbündeln von Rändern des Zwischenbilds (G') in der Hauptabtastrichtung, die aus dem lichtstreuenden Element (210) austreten, auf einen zentralen Bereich des Betrachtungsbereichs (S) innerhalb eines vorgeschriebenen Abstands von einem Zentrum des Betrachtungsbereichs (S) in der Hauptabtastrichtung zulaufen, oder
(b) das optische Abtastsystem (201, 208, 210) so angeordnet ist, dass gleich oder mehr als fünfzig Prozent der Rand-Laserstrahlbündel von den Rändern des Zwischenbilds (G') in der Hauptabtastrichtung auf innerhalb des Betrachtungsbereichs (S) zulaufen.

2. Bildanzeigevorrichtung (200) nach Anspruch 1, wobei ein Teil des Rand-Laserstrahlbündels innerhalb eines Bereichs einer Halbwertsbreite nach dem Austritt aus dem lichtstreuenden Element (210), von den Rand-Laserstrahlbündeln von den Rändern des Zwischenbilds (G') in mindestens einer der Hauptabtastrichtung und der untergeordneten Abtastrichtung, in die Reflexionsebene des lichtreflektierenden Elements eintritt.

3. Bildanzeigevorrichtung (200) nach einem der Ansprüche 1 und 2, wobei der vorgeschriebene Abstand 75 mm beträgt.

4. Bildanzeigesystem, umfassend:
die Bildanzeigevorrichtung (200) nach einem der Ansprüche 1 bis 3; und
ein zu projizierendes Element (302),
wobei das zu projizierende Element (302) das Bildlicht reflektiert, das von der Bildanzeigevorrichtung (200) projiziert wird, um es einem Beobachter zu ermöglichen, das reflektierte Bildlicht visuell zu erkennen.

## Revendications

1. Appareil d'affichage d'image (200) qui permet à un observateur de reconnaître visuellement une image dans une plage de points de vue spécifiée (S), l'appareil d'affichage d'image (200) comprenant :
une source de lumière (201) configurée pour émettre une lumière d'image basée sur des données d'image prescrites ;
un élément de dispersion de lumière (210) comprenant un réseau de microlentilles configuré pour disperser un faisceau de rayons laser de la lumière d'image ;
un système optique de balayage (201, 208, 210) configuré pour balayer la lumière d'image avec un scanneur optique (208) dans une direction de balayage principal et une direction de sous-balayage qui est orthogonale à la direction de balayage principal, pour former une image intermédiaire (G') sur l'élément de dispersion de lumière (210) ; et
un système optique de projection (211) configuré pour projeter la lumière d'image dispersée à partir de l'élément de dispersion de lumière (210) vers un élément à projeter (302) qui transmet la lumière, et pour réfléchir et guider la lumière d'image à l'intérieur la plage de points de vue spécifiée (S),
dans lequel le système optique de projection (211) comprend un seul élément réfléchissant la lumière,
dans lequel la longueur (Q) dans la direction de balayage principal d'une zone que la lumière d'image émise par l'élément de dispersion de lumière (210) puis guidé à l'intérieur de la plage de points de vue (S) entre un plan de réflexion de l'élément réfléchissant la lumière est agencée de manière à être plus grande que la longueur de chemin optique (P) entre un plan de sortie de l'élément de dispersion de lumière (210) et le plan de réflexion de l'élément réfléchissant la lumière,
dans lequel le système optique de balayage (201, 208, 210) comprend un miroir convexe (209) configuré pour réfléchir la lumière d'image qui est balayée par le scanneur optique (208), dans lequel un plan de réflexion du miroir convexe (209) a une surface asphérique à symétrie de rotation ou une surface de forme libre conçue de telle sorte que les angles d'incidence (θ1' et θ2') de la lumière balayée (L1' et L2') par rapport au réseau de microlentilles (210) correspondent approximativement aux angles de sortie (θ1 et θ2) des faisceaux lumineux centraux de bord (L1 et L2) de la lumière de projection qui sont émis par le réseau de microlentilles (210) dans la direction de balayage principal,
dans lequel le système optique de balayage (201, 208, 210) est agencé de telle sorte que tout les faisceaux de rayons laser émis à partir du centre dans la direction de balayage principal de l'image intermédiaire (G') se dispersent sur toute la plage de la plage de points de vue (S) sans se disperser en dehors de la plage de points de vue (S), dans lequel :
(a) le système optique de balayage (201, 208, 210) est agencé de telle sorte que les faisceaux lumineux centraux des faisceaux de rayons laser de bord provenant des bords de l'image intermédiaire (G') dans la direction de balayage principal, qui sortent de l'élément de dispersion de lumière (210), se dirigent vers une plage centrale de la plage du point de vue (S) sur une distance prescrite à partir d'un centre de la plage de points de vue (S) dans la direction de balayage principal, ou
(b) le système optique de balayage (201, 208, 210) est agencé de manière à être égal ou supérieur à cinquante pour cent des faisceaux de rayons laser de bord provenant des bords de l'image intermédiaire (G') dans la direction de balayage principal se dirige vers l'intérieur de la plage de points de vue (S).

2. Appareil d'affichage d'image (200) selon la revendication 1, dans lequel une partie du faisceau de rayons laser de bord dans une plage d'une largeur d'une demi-valeur après la sortie de l'élément de dispersion de lumière (210), hors des faisceaux de rayons laser de bord provenant des bords de l'image intermédiaire (G') dans au moins l'une parmi la direction de balayage principal et la direction de sous-balayage, pénètre dans le plan de réflexion de l'élément réfléchissant la lumière.

3. Appareil d'affichage d'image (200) selon l'une quelconque des revendications 1 et 2, dans lequel la distance prescrite est de 75 mm.

4. Système d'affichage d'image comprenant :
l'appareil d'affichage d'image (200) selon l'une quelconque des revendications 1 à 3 ; et
un élément à projeter (302),
dans lequel l'élément à projeter (302) réfléchit la lumière d'image projetée depuis l'appareil d'affichage d'image (200) pour permettre à un observateur de reconnaître visuellement la lumière d'image réfléchie.
